# EUROPÄISCHE PATENTSCHRIFT

(11) **EP 2 832 204 B1**
(45) Veröffentlichungstag und Bekanntmachung des Hinweises auf die Patenterteilung: **25.04.2018**
(21) Anmeldenummer: 14001947.2
(22) Anmeldetag: 05.06.2014
(51) Int. Cl.: A01C 23/00, G01F 1/66, G01M 3/24

(54) **Vorrichtung zur Ausbringung von Gülle**
Device for distributing liquid manure
Dispositif d'épandage de lisier

(30) Priorität: 02.08.2013 DE 102013012845
(43) Veröffentlichungstag der Anmeldung: 04.02.2015
(73) Patentinhaber: Josef Kotte Landtechnik GmbH & Co. KG, 49597 Rieste (DE)
(72) Erfinder: Bösenberg, Daniel, 48282 Emsdetten (DE); Johanning, Bernd, 49326 Melle (DE)
(74) Vertreter: Weeg, Thomas

(56) Entgegenhaltungen:
- EP-A1- 0 846 408
- WO-A1-96/29009
- WO-A1-2012/125575
- WO-A2-2004/016164
- CA-A1- 1 187 596
- DE-A1- 10 043 319
- DE-A1- 19 723 137
- GB-A- 2 082 324
- US-A- 5 024 356

## Beschreibung

Die vorliegende Erfindung bezieht sich auf eine Vorrichtung zur Ausbringung von Gülle nach dem Oberbegriff des Anspruchs 1.

Aus dem Stand der Technik ist es bekannt, Gülle aus einem fahrbaren Gülletank auf landwirtschaftlichen Nutzflächen auszubringen, um damit ein Feld zu düngen. Beim Überfahren des Feldes fließt Gülle aus dem Gülletank über die Verteilschläuche in den Boden. Durch die in der Gülle enthaltenen Nährstoffe wie Stickstoff, Phosphor und Kalium sowie andere Nährstoffe kann der Einsatz von Kunstdüngern verringert oder ganz darauf verzichtet werden. Eine gattungsgemäße Vorrichtung ist in der Schrift EP 0 846 408 A1 offenbart.

Dabei ist Gülle kein homogenes Gut. Gülle besteht zwar üblicherweise aus Urin und Kot von landwirtschaftlichen Nutztieren, es können aber auch Bestandteile des Einstreus wie beispielsweise Stroh in der Gülle enthalten sein. Auch kann der Flüssigkeitsanteil in der Gülle variieren, so dass man zwischen Dünngülle, Dickgülle, Schwemmmist und Flüssigmist unterscheidet. Je nach Lagerdauer der Gülle können Feststoffanteile auch während der Lagerung Klumpen gebildet haben. Zudem wird als Gülle auch Biogassubstrat ausgebracht, das ebenfalls noch Feststoffanteile enthalten kann.

Durch die Einstreubestandteile und Klumpen in der Gülle können die Verteilschläuche oder die an ihren Enden angeordneten Einbringungsorgane während des Ausbringens der Gülle auf dem Feld verstopfen. Ist ein einzelner Verteilschlauch oder ein Einbringungsorgan verstopft, kann durch diesen Verteilschlauch oder das Einbringungsorgan keine Gülle mehr in den Boden eingebracht werden, bis die Verstopfung beseitigt ist. Die Pflanzen, die in den Bodenbereichen aufwachsen, in denen der Verteilschlauch oder das Einbringungsorgan während des Ausbringens der Gülle verstopft war, haben bei der Gülleausbringung weniger Nährstoffe als beabsichtigt war erhalten, was zu Ertragseinbußen bei den betroffenen Pflanzen führt. Die fehlerhafte Gülleausbringung ist aber erst viel zu spät durch schwach gewachsene Pflanzen im stehenden Bestand sichtbar. Um die Ertragseinbußen möglichst gering zu halten, ist es wichtig, Verstopfungen von Verteilschläuchen oder Einbringungsorganen möglichst frühzeitig zu erkennen, um sodann unmittelbar die Verstopfungen beseitigen zu können.

Bisher ist die gleichmäßige Ausbringung insbesondere optisch vom Fahrer überwacht worden. Durch zunehmend große Gülletanks kann ein Traktorfahrer aus seiner Kabine aber kaum noch erkennen, ob sich bei der Gülleausbringung hinter ihm ein gleichmäßiges Verteilbild der Gülle ergibt. Erst wenn er die nächste Spur in Gegenrichtung bearbeitet, kann er Ausbringungsfehler erkennen. Wenn die Gülle während der Ausbringung direkt in den Boden eingearbeitet wird, beispielsweise mit einer Gülleunterfußdüngung, hat der Traktorfahrer keine Möglichkeit mehr, die gleichmäßige Ausbringung und Verteilung der Gülle optisch zu überwachen.

Aus den Schriften DE 197 23 137 A1 und WO 2012/125575 ist es für Sämaschinen bekannt, die Schläuche, durch die das Saatgut mit einem Luftstrom befördert wird, mit akustischen Sensoren auf eventuelle Verstopfungen zu überwachen. Da das Saatgut aus harten Körnern besteht, die während ihrer Beförderung mit einer vergleichsweise hohen Geschwindigkeit mehrfach auf die Innenfläche der Schlauchwandung auftreffen, entsteht beim Betrieb der Sämaschine in den Schläuchen ein gut hörbares und mit Sensoren kontrollierbares lautes Geräusch, das auch die erheblichen Betriebsgeräusche der fahrenden Arbeitsmaschine übertönt und dessen Fehlen als ein Indiz für eine Verstopfung gewertet werden kann. Da die Gülle als Flüssigkeit bei den vergleichsweise niedrigen Fördergeschwindigkeiten, mit denen die Gülle durch die Schläuche fliesst, jedoch kaum Fließgeräusche verursacht und die mit der Gülle bewegten Schwebstoffe auch nicht wie harte Saatgutkörner auf die Schlauchwandung aufprallen, sind akustische Sensoren als Mittel zur Überwachung von Verstopfungen der Gülleschläuche bisher als ungeeignet angesehen worden.

Demgemäß ist es die Aufgabe der vorliegenden Erfindung, eine Vorrichtung zu schaffen, mit der ein Traktorfahrer eventuelle Verstopfungen von Verteilschläuchen und/oder Einbringungsorganen möglichst zeitnah erkennen kann.

Die Aufgabe wird für eine gattungsgemäße Vorrichtung durch die kennzeichnenden Merkmale des Anspruchs 1 gelöst.

Die Aufgabe wird für ein gattungsgemäßes Verfahren durch die kennzeichnenden Merkmale des Anspruchs 14 gelöst.

Durch die erfindungsgemäßen akustischen Sensoren ist es entgegen der herkömmlichen Vorstellung doch möglich, zeitnah und ohne ständige optische Kontrollen - soweit diese überhaupt möglich sind - eine Verstopfung eines Verteilschlauchs zu erkennen und die Verstopfung zu beseitigen. Ertragseinbußen bei den Pflanzen, für die die Gülle in den Ackerboden eingebracht wird, können auf diese Weise minimiert werden. Die korrekte Ausbringung der Gülle kann über die akustischen Sensoren permanent überwacht und bei einer entsprechenden technischen Ausrüstung und einer Anbindung der akustischen Sensoren an eine Precision Farming-Technik auch dokumentiert werden.

Die akustische Sensortechnik ist grundsätzlich unabhängig von der Art und Zusammensetzung der auszubringenden Gülle einsetzbar. Ein Fliessgeräusch in den Verteilschläuchen entsteht immer, wenn Gülle hindurch fließt. Ist ein Verteilschlauch verstopft, entfällt auch unmittelbar das Fliessgeräusch, was von dem jeweiligen akustischen Sensor gemessen und von der Auswertungselektronik durch den Vergleich mit dem Schwellwert erkannt wird und der Bedienperson signalisiert werden kann.

Die Empfindlichkeit der akustischen Sensoren sollte so eingestellt sein, dass sie die akustischen Durchflussgeräusche aus dem jeweils zugehörigen Verteilschlauch mit einer hinreichenden Signalhöhe erfassen. Ist die Empfindlichkeit zu hoch, werden noch Geräusche erfasst, obwohl bereits eine Verstopfung vorliegt, ist die Empfindlichkeit zu niedrig, können die Sensorsignale von der Auswerteelektronik nicht mehr zwischen Fliess- und Verstopfungszustand differenziert werden.

Die Überwachung auf eventuelle Verstopfungen mittels der akustischen Sensoren ist unabhängig von der verwendeten Gülle-Einbringungstechnik einsetzbar. Die akustischen Sensoren funktionieren bei einer Gülleausbringung durch über den Boden schleifende Schleppschläuche in gleicher Weise wie bei einer Gülleunterfußdüngung, bei der die unter der Bodenoberfläche ausgebrachte Gülle nicht mehr sichtbar ist.

Die Sensoren können an einer beliebigen Stelle entlang der Verteilschläuche positioniert werden. Die in Strömungsrichtung der Gülle gesehen frühest mögliche Position befindet sich unmittelbar hinter der Verteilerpumpe. Meistens wird der Güllestrom von der Verteilerpumpe aus erst noch in einen Verteilerkopf geführt, und erst ab dem Verteilerkopf wird dann der Güllefluss auf den Güllefluss vereinzelnde Verteilschläuche aufgeteilt. In diesem Fall können die akustischen Sensoren bevorzugt stromabwärts des Verteilerkopfes positioniert werden, grundsätzlich ist aber auch eine Positionierung zwischen der Verteilerpumpe und dem Verteilerkopf möglich, wenn nur der Güllestrom in diesem Förderabschnitt auf Volumenschwankungen hin überwacht werden soll. Die letztmögliche Position befindet sich am Ausbringungsende eines Verteilschlauches. Die von einem akustischen Sensor zu überwachenden Fliessgeräusche entstehen auf der vollen Länge eines Verteilschlauches. Aus diesem Grund können bei der Auswahl des Anbringungsortes alle entscheidungsrelevanten Gesichtspunkte berücksichtigt und je nach Gewichtung der Einzelaspekte ein entsprechender Anbringungsort entlang einem Verteilschlauch ausgewählt werden.

Ein Vorteil eines akustischen Sensors ist darin zu sehen, dass dieser keinen direkten Kontakt zur durch einen zu überwachenden Verteilschlauch hindurch fließenden Gülle haben muss. Die freien Innenquerschnitte der Verteilschläuche werden nicht durch die Überwachungstechnik eingeengt. Dadurch können sich keine Feststoffe an den Sensoren anlagern, wodurch für sich bereits eine Verstopfung verursacht werden könnte. Die Sensoren selbst sind nicht den chemisch aggressiven Stoffen ausgesetzt, die in der Gülle enthalten sind, und werden deshalb nicht in ihrer Funktion über die Zeit beeinträchtigt.

Akustische Sensoren sind zudem kostengünstig herstellbar und einbaubar. Bei eventuellen Beschädigungen oder Funktionsfehlern können diese leicht repariert und ausgetauscht werden. Akustische Sensoren sind insbesondere auch robust, unabhängig von Temperaturen, Schmutz, Umgebungsfeuchtigkeit und Stöße, so dass sie sich deshalb für Offroad-Anwendungen wie die Gülleausbringung besonders eignen. Akustische Sensoren sind auch nachträglich an vorhandene Maschinen im Rahmen einer Nachrüstung anbaubar.

Es ist möglich, jeden einzelnen akustischen Sensor mit einem eigenen Computerchip zu versehen, mit dem er über die Verbindungsleitung verbunden ist und der mit der Auswerteelektronik mit der darauf gespeicherten Auswertungssoftware ausgestattet ist. Dadurch entsteht ein einziges Überwachungsmodul, das als eine Baueinheit auf einen Verteilschlauch aufsetzbar ist. Die Montage kann über eine Schlauchschelle erfolgen, an der der akustische Sensor mit der Verbindungsleitung und dem Computerchip befestigt ist. Der Computerchip kann ergänzend über einen Funkbaustein verfügen, über den die Auswerteelektronik über die Alarmierungsfunktion der Auswertungssoftware ein Alarmsignal per Funk an einen Empfänger funken kann, der beispielsweise in der Traktorkabine oder auf der Stirnseite des Gülletanks angebracht sein kann, wo der Empfänger optische und/oder akustische Signale für die Bedienperson erzeugen kann. Das jeweilige Überwachungsmodul kann aber auch über eine herkömmliche Verkabelung mit einem Bordrechner des Gülletanks oder eines Zugfahrzeugs wie einem Traktor verbunden sein, um dort eventuelle Alarmsignale auszugeben. Wenn ein Verteilschlauch nicht auf eine mögliche Verstopfung überwacht werden soll, kann darauf verzichtet werden, an diesem Verteilschlauch einen akustischen Sensor anzubringen.

Neben einzelnen Überwachungsmodulen, die an jedem Verteilschlauch befestigbar sind, ist es aber auch möglich, mehrere akustische Sensoren über Verbindungsleitungen mit einer gemeinsamen Auswerteelektronik zu verbinden. Insbesondere, wenn an einem Gülletank mehrere Verteilschläuche zu überwachen sind, können die Kosten für die Auswerteelektronik deutlich gesenkt werden, weil nur eine Auswerteelektronik für mehrere daran angeschlossene akustische Sensoren eingesetzt wird.

Als Alarmsignal können beispielsweise akustische und/oder optische Signale ausgegeben werden. Das Alarmsignal kann aber im Rahmen einer Traktorsteuerung nach dem Muster Anbaugerät-steuert-Traktor auch dazu verwendet werden, den Traktor sofort und automatisch abzubremsen oder ganz zu stoppen, wobei in einem Traktor-Display zusätzlich eine Alarmleuchte aufleuchten oder ein Klartext-Hinweis angezeigt werden kann, um die Bedienperson des Traktors über den Grund für die Arbeitsunterbrechung zu informieren.

Nach einer Ausgestaltung der Erfindung ist die Auswerteelektronik mit einem Alarmierungsmittel verbunden, an das das Alarmsignal übertragbar ist. Als Alarmierungsmittel kommen beispielsweise Warnhupen, Lampen, Anzeigedisplays und dergleichen in Betracht, um die Bedienperson auf die Verstopfung aufmerksam zu machen.

Nach einer Ausgestaltung der Erfindung ist von dem Alarmierungsmittel bei der Ausgabe eines Alarmsignals anzeigbar, von welchem einem Verteilschlauch zugeordneten akustischen Sensor oder von welchem dem akustischen Sensor zugeordneten Verteilschlauch das den Schwellwert unterschreitende Schallsignal übermittelt worden ist. So können beispielsweise LED-Lichter benutzt werden, um den verstopften Verteilschlauch identifizierbar zu machen, oder die Nummer des Verteilschlauchs wird auf einem Display angezeigt. Dies erleichtert der Bedienperson die Fehlersuche zur Beseitigung der Verstopfung.

Nach einer Ausgestaltung der Erfindung weist die in die Auswerteelektronik integrierte Auswertesoftware eine Anpassungsfunktion auf, über die der vorgegebene Schwellwert und/oder die Lautstärke der übertragenen Durchflussgeräusche für eine aktuell auszubringende Gülle automatisch anpassbar sind, oder an die Auswerteelektronik ist eine manuelle Bedienvorrichtung angeschlossen, durch deren Betätigung der vorgegebene Schwellwert und/oder die Lautstärke der übertragenen Durchflussgeräusche für eine aktuell auszubringende Gülle manuell anpassbar sind. Durch diese Anpassungsfunktion ist es möglich, die Sensorempfindlichkeit an ein bestimmtes Durchflussmedium anzupassen, das mehr oder weniger Fliessgeräusche macht, oder eine Anpassung ist erforderlich, weil die Gülle mit besonders hoher oder besonders niedriger Durchflussmenge durch die Verteilschläuche befördert wird.

Nach einer Ausgestaltung der Erfindung ist der akustische Sensor auf die Außenseite eines zu überwachenden Verteilschlauchs aufgesetzt. Durch die Anordnung des akustischen Sensors auf der Außenseite des Verteilschlauches engt dieser nicht an der Anbringungsstelle den zur Beförderung der Gülle verfügbaren Innenraum des Verteilschlauches ein. Er bildet auf diese Weise kein Hindernis für die durch den Verteilschlauch hindurch fließende Gülle, was für sich bereits eine Verstopfung auslösen könnte. Der akustische Sensor ist auch nicht den chemisch aggressiven Bestandteilen der Gülle ausgesetzt, was sonst seine Lebensdauer herabsetzen könnte. Er ist zudem für Wartungs- und Reparaturarbeiten gut zugänglich.

Nach einer Ausgestaltung der Erfindung weist der akustische Sensor ein Elektretmikrofon mit einer als Plattenkondensator aufgebauten Schallmembran auf, wobei die vom Plattenkondensator unter Schalleinwirkung erzeugten Spannungsschwankungen vom akustischen Sensor als ein elektrisches Spannungssignal als Sensorsignal übertragbar sind. Elektretmikrofone sind als industriell gefertigte Massenware kostengünstig zu bekommen. Sie sind klein, leicht und verfügen über eine gute Aufnahmefähigkeit von Geräuschen über das gesamte Frequenzspektrum hinweg. Sie sind unempfindlich gegen Stöße und Vibrationen, was bei den rauen landtechnischen Anwendungen wichtig für die Zuverlässigkeit und Langlebigkeit der verwendeten Sensoren ist. Sie wandeln die aufgenommenen Geräusche unmittelbar in elektrische Signale um, die gut von einer Auswertelektronik ausgewertet werden können.

Nach einer Ausgestaltung der Erfindung ist dem Elektretmikrofon ein Stethoskopkopf mit einer Membran und einem sich zwischen der Innenseite der Membran und dem Elektretmikrofon erstreckenden Schallraum vorgeordnet. Über die Membran wird im Innenraum des Stethoskopkopfes die darin befindliche Luft in Schwingungen versetzt, wodurch die von der Membran aufgenommenen Schallimpulse verstärkt und zum Elektretmikrofon übertragen werden. Durch die dem Elektretmikrofon vorgeschaltete Membran wird das Elektretmikrofon zusätzlich gegen widrige Einflusse wie Schmutz, Feuchtigkeit und dergleichen geschützt

Nach einer Ausgestaltung der Erfindung ist jeder akustische Sensor in einer eigenen Akustikbox oder sind mehrere oder alle akustischen Sensoren in einer gemeinsamen Akustikbox angeordnet, wobei die Akustikbox den oder die darin angeordneten akustischen Sensoren gegen äußeren Schall abschirmen. Durch die akustische Abschirmung wird der Einfluss von Betriebsgeräuschen des Traktors oder der Verteilerpumpe des Güllefasses oder sonstigen Störgeräuschen verringert. Die Erkennungsgenauigkeit der akustischen Sensoren hinsichtlich der Fliessgeräusche in den Verteilschläuchen wird dadurch verbessert. Die Akustikbox schirmt den akustischen Sensor sowie die Auswerteelektronik zudem gegen Schmutz und Feuchtigkeit und mechanische Beschädigungsrisiken ab. Das Anbaugerät kann beispielsweise auch im Bereich der Akustikbox mit einem Hochdruckreiniger gereinigt werden. Nach einer Ausgestaltung einer Akustikbox verfügt diese über Durchführungsöffnungen zur Durchführung der jeweiligen Verteilschläuche. Im Innenraum der Akustikbox sind dann die akustischen Sensoren auf die jeweiligen durch die Akustikbox hindurch geführten Verteilschläuche aufgesetzt.

Nach einer Ausgestaltung der Erfindung ist an die Auswerteelektronik ein E-/A-Modul angeschlossen. Durch das E-/A-Modul kann die Auswerteelektronik mit externen Rechnern verbunden werden. So ist es beispielsweise möglich, die Auswerteelektronik an ein Busnetz des Güllefasses und/oder des Traktors anzuschließen. Über das E-/A-Modul können beispielsweise von der Auswerteelektronik generierte Alarmsignale auf einem Bordmonitor des Traktors und/oder des Güllefasses angezeigt werden. Die von der Auswerteelektronik empfangenen Sensordaten können auch für Dokumentations- und/oder Auswertungszwecke über das E-/A-Modul exportiert werden. So können die Sensordaten als Nachweis für eine ordnungsgemäße und störungsfreie Ausbringung der Gülle dienen, beispielsweise auch im Rahmen einer bei der Ausbringung erstellten Düngekarte.

Nach einer Ausgestaltung der Erfindung weist die Vorrichtung eine automatisch, insbesondere von der in die Auswerteelektronik integrierten Auswertesoftware, und/oder manuell auslösbare Spülfunktion auf, mit der der als verstopft erkannte Verteilschlauch mit einer Spülvorrichtung durchspülbar ist. Durch eine manuell oder automatisch auslösbare Spülfunktion wird die Beseitigung der Verstopfung vereinfacht. So kann beispielsweise ein Spülgut aus einem Vorratstank gezielt und unter Hochdruck in den verstopften Verteilschlauch - eventuell bei Absperrung aller übrigen Verteilschläuche - geleitet werden, um die Verstopfung zu beseitigen, oder die im Verteilschlauch befindliche Güllesäule wird über eine zu diesem Verteilschlauch zugeschaltete Pumpe gepulst, wobei die Pumpe in kurzen Abständen zwischen einem Saug- und einem Druckbetrieb hin und her geschaltet wird, um die Verstopfung aufzulösen. Die verstopfungsbedingte Ausfallzeit bei der Ausbringung der Gülle kann durch die Spülfunktion erheblich verringert werden.

Nach einer Ausgestaltung der Erfindung weist die Auswertungssoftware der Auswerteelektronik eine Vergleichsfunktion auf, über die die Sensordaten mehrerer akustischer Sensoren miteinander vergleichbar sind und bei größeren Unterschieden der gemessenen Lautstärke und/oder Frequenzen unterschiedlicher akustischer Sensoren ist über die Alarmierungsfunktion ein Warnsignal ausgebbar. Die unterschiedliche Lautstärke und/oder Frequenzen können auf eine unterschiedliche Durchflussgeschwindigkeit zurück zu führen sein, die eine beginnende Verstopfung indiziert. Unterschiedliche Durchflussmengen sind aber auch nachteilig für die gleichmäßige Verteilung der in der Gülle enthaltenen Nährstoffe im Boden. Die unterschiedlichen Geräusche deuten also immer auf eventuelle Funktionsprobleme hin, für die die Ursache ermittelt und beseitigt werden sollte. Durch ein Warnsignal, das anders ausfallen kann als ein Alarmsignal, kann die Bedienperson auf die möglichen Funktionsprobleme hingewiesen werden, bevor eine vollständige Verstopfung auftritt. Auch können so frühzeitig Maßnahmen gegen eine ungleichmäßige Verteilung der Nährstoffe im Boden ergriffen werden.

Nach einer Ausgestaltung der Erfindung ist die Auswertungssoftware der Auswerteelektronik mit der Verteilerpumpe verbunden, über diese Verbindung ist ein Wert über die aktuell eingestellte Förderleistung übermittelbar, und dieser Wert ist von der Auswertungssoftware berücksichtigbar, um die von den akustischen Sensoren übermittelten Sensordaten auszuwerten. Je nachdem, auf welche Förderleistung die Verteilerpumpe eingestellt ist, können sich die von den akustischen Sensoren abhörbaren Fließgeräusche verändern. In der Auswertungssoftware können Regelalgorithmen vorhanden sein, durch die eine förderleistungsabhängige Verstärkung oder Dämpfung der von den akustischen Sensoren übermittelten Sensordaten automatisch erfolgt, wenn die Förderleistung verändert wird. Die aktuelle Förderleistung kann auch zur Plausibilisierung der übermittelten Sensordaten verwendet werden.

Nach einer Ausgestaltung der Erfindung weist die Auswertungssoftware der Auswerteelektronik einen Speicher auf, in dem die von den akustischen Sensoren übermittelten Sensordaten über ein Zeitintervall abspeicherbar sind, insbesondere für jeden akustischen Sensor individuell, und die Auswertungssoftware weist eine Vergleichsfunktion auf, über die die Sensordaten über das Zeitintervall miteinander vergleichbar sind, um aus dem Vergleich eine Prognose über eine drohende Verstopfung zu erstellen, und von der Auswertungssoftware ist bei der Erkennung einer drohenden Verstopfung über die Alarmierungsfunktion ein Warnsignal ausgebbar. Ist über das Zeitintervall anhand der leiser werdenden Fließgeräusche erkennbar, dass sich die Durchflussmenge im Verteilschlauch verringert, ist das ein Indiz für eine beginnende Verstopfung und eine aktuelle Ungleichverteilung der Gülle im Boden. Hier können bei einem entsprechenden Warnsignal Gegenmaßnahmen frühzeitig ergriffen werden.

Nach einer Ausgestaltung der Erfindung macht das erfindungsgemäße Verfahren Gebrauch von den gegenständlichen Merkmalen von einem oder mehreren der Ansprüche 1 bis 13. Die Vorteile der Ausgestaltungen gemäß den Ansprüchen 1 bis 13 gelten bei der Nutzung im Rahmen des erfindungsgemäßen Verfahrens entsprechend.

Es wird ausdrücklich darauf hingewiesen, dass die vorstehend beschriebenen Ausgestaltungen der Erfindung jeweils für sich mit dem Gegenstand des Hauptanspruches kombinierbar sind, soweit dem keine technisch zwingenden Hindernisse entgegenstehen.

Weitere Abwandlungen und Ausgestaltungen der Erfindung ergeben sich aus der nachfolgenden gegenständlichen Beschreibung und den Zeichnungen.

Die Erfindung soll nun anhand eines Ausführungsbeispiels näher beschrieben werden. Es zeigen:
- Fig. 1:: eine Seitenansicht eines Traktors mit Gülletank,
- Fig. 2:: eine Ansicht auf einen Abschnitt eines Verteilschlauches mit einem darauf aufgesetzten akustischen Sensor,
- Fig. 3:: eine Detailansicht auf einen akustischen Sensor,
- Fig. 4:: eine Ansicht auf eine geschlossene Akustikbox, und
- Fig. 5:: einen Anblick von schräg oben in eine geöffnete Akustikbox.

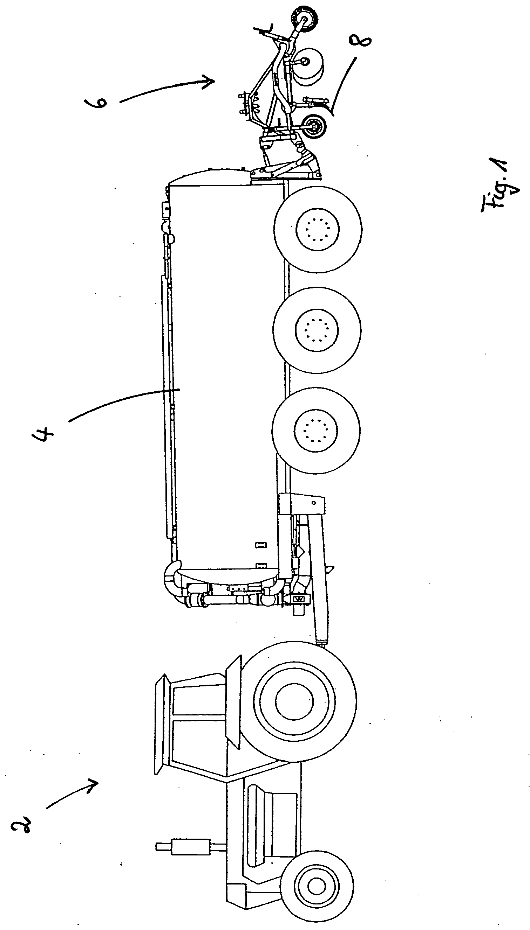

In Fig. 1 ist ein Traktor 2 gezeigt, an den ein Gülletank 4 angehängt ist. Die im Gülletank befindliche Gülle wird über eine Verteilerpumpe, einen stromabwärts des Gülleflusses darauf folgenden Verteilerkopf und daran angeschlossene Verteilschläuche, die in Fig. 1 nicht näher dargestellt sind, über ein Anbaugerät 6 auf dem Boden verteilt. Im Ausführungsbeispiel verfügt das Anbaugerät 6 über einen Unterfußinjektor 8, an dem jeweils ein Verteilschlauch 10 mündet. Da der Unterfußinjektor 8 bei abgesenktem Anbaugerät 6 mit seiner Spitze durch den Boden gezogen wird, befindet sich auch die Mündungsöffnung eines Verteilschlauches 10 unterhalb der Bodenoberfläche. Bei einer solchen Ausbringtechnik ist für die Bedienperson im Traktor nicht mehr erkennbar, ob die Gülle durch die Verteilschläuche 10 gleichmäßig fließt oder ob einzelne Verteilschläuche 10 verstopft sind.

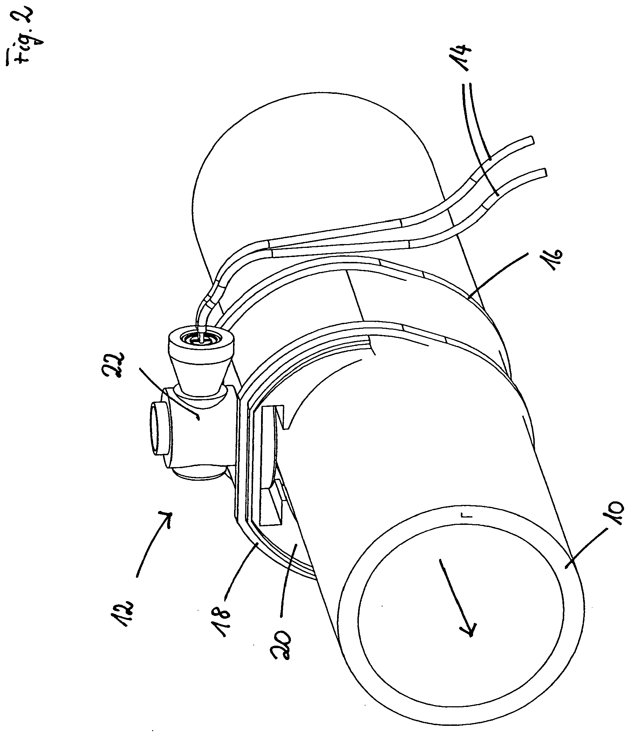

In Fig. 2 ist ein kurzer Abschnitt eines Verteilschlauches 10 gezeigt, auf den ein akustischer Sensor 12 aufgesetzt ist. Der akustische Sensor 12 ist über eine Verbindungsleitung 14 mit einer zeichnerisch nicht näher dargestellten Auswerteelektronik verbunden. Der akustische Sensor 12 ist über eine Schlauchschelle 16 auf der Außenseite des Verteilschlauches 10 gehalten. Die Schlauchschelle 16 drückt eine Stethoskopaufnahme 18 auf den Verteilschlauch 10. Der akustische Sensor 12 ist in der Stethoskopaufnahme 18 formschlüssig und/oder kraftschlüssig gehalten. Um Störgeräusche oder Vibrationen zu verringern, ist im Ausführungsbeispiel zwischen der Stethoskopaufnahme 18 und der Oberfläche des Verteilschlauches 10 noch ein Dämmstoff 20 vorhanden, der den akustischen Sensor 12 positioniert und gegen Störgeräusche abschirmt.

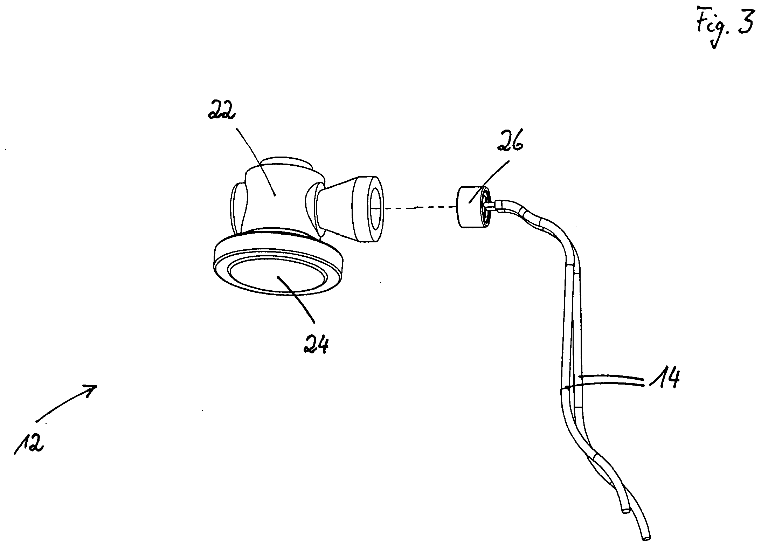

In Fig. 3 sind die Bauteile des akustischen Sensors 12 näher dargestellt. Im Ausführungsbeispiel ist der akustische Sensor 12 aus einem Stethoskopkopf 22 und einem damit zu verbindenden Elektretmikrofon 26 zusammengesetzt. Der Stethoskopkopf 22 ist zur Oberfläche des Verteilschlauches 10 hin mit einer Membran 24 versehen, die den im Stethoskopkopf 22 befindlichen Schallraum dichtend schließt. Die Schallwellen, die aus einem vom akustischen Sensor 12 überwachten Verteilschlauch 10 auf die Membran 24 treffen und diese in Schwingungen versetzen, werden in dem Schallraum verstärkt und an das Elektretmikrofon 26 weitergeleitet. Das Elektretmikrofon 26 wandelt die Schwingungen in elektrische Signale um, die über die Verbindungsleitungen 14 an die Auswerteelektronik übermittelt werden.

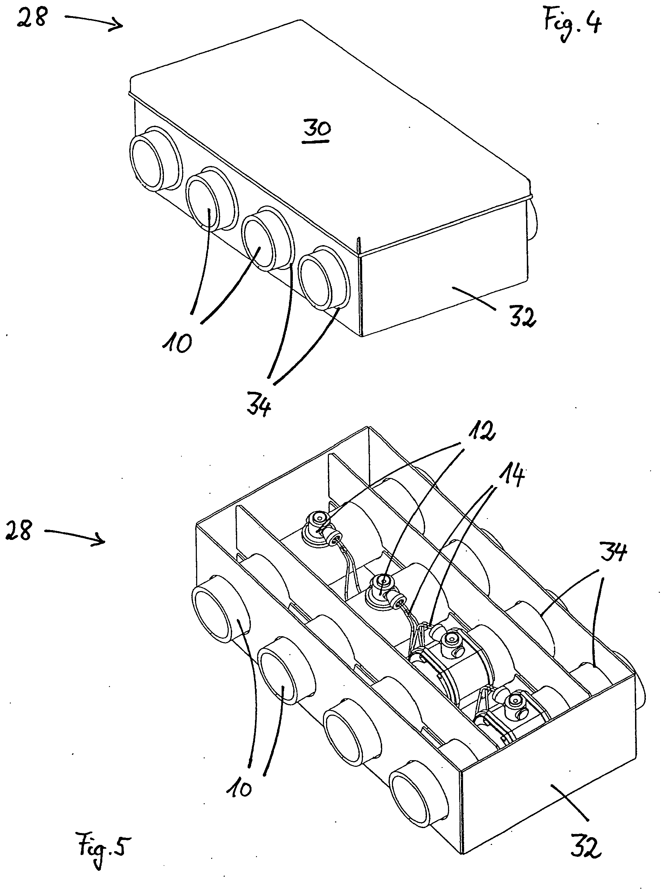

In Fig. 4 ist ein Ausführungsbeispiel einer Akustikbox 28 gezeigt. Die Aufnahmekammer 32 der Akustikbox 28 ist während des Betriebes von einem Deckel 30 verschlossen. Die Verteilschläuche 10 sind durch Durchgangsöffnungen 34 in den Seitenwänden der Aufnahmekammer 32 hindurchgeführt. Im Innenraum der Akustikbox 28 befinden sich im Ausführungsbeispiel vier akustischen Sensoren 12, die auf die durch die Akustikbox 28 hindurch geführten Verteilschläuche 10 aufgesetzt sind.

In Fig. 5 ist ein Einblick in den Innenraum der Aufnahmekammer 32 der Akustikbox 28 gezeigt. In dieser Ansicht ist erkennbar, wie die akustischen Sensoren 12 auf die durch die Aufnahmekammer 32 hindurch geführten Verteilschläuche 10 jeweils aufgesetzt sind. Die Sensorsignale der akustischen Sensoren 12 werden über die Verbindungsleitungen 14 an eine in Fig. 5 nicht näher dargestellte Auswerteelektronik übermittelt. Durch die Einbettung der akustischen Sensoren 12 in die Akustikbox 28 sind diese von Störeinflüssen akustischer Art, aber auch vor Schmutz, Feuchtigkeit und mechanischen Beschädigungen geschützt.

Die Akustikbox 28 kann an ein Anbaugerät 6 an einer geeigneten Position angebaut werden. Die Fließgeräusche der über die Verteilschläuche 10 aus einem Gülletank 4 zu einem Unterfußinjektor 8 beförderten Gülle können von den akustischen Sensoren 12 erfasst und an die Auswerteelektronik übermittelt werden. Die Auswerteelektronik verfügt über eine geeignete Software, um die von den angeschlossenen akustischen Sensoren 12 erhaltenen Sensordaten in erfindungsgemäßer Form zu verarbeiten.

Das vorstehend beschriebene Ausführungsbeispiel dient nur Zwecken der Erläuterung der Erfindung und ist nicht auf dieses beschränkt. Dem Fachmann bereitet es keine Schwierigkeiten, die Erfindung auf eine ihm als geeignet erscheinende Weise für einen konkreten Anwendungsfall abzuwandeln und anzupassen.

## Patentansprüche

1. Vorrichtung zur Ausbringung von Gülle mit einem Gülletank (4) und an den Gülletank (4) angeschlossenen mehreren Verteilschläuchen (10), wobei an jedem der zu überwachenden Verteilschläuche (10) ein Sensor (12) angebracht ist, der Sensor (12) über eine Verbindungsleitung mit einer Auswerteelektronik verbunden ist, über die Verbindungsleitung die von dem Sensor (12) erfassten Durchflusssignale an die Auswerteelektronik übertragbar sind, und die Auswerteelektronik eine Auswertungssoftware aufweist, mit der die übertragenen Durchflusssignale mit einem vorgegebenen Schwellwert vergleichbar sind, **dadurch gekennzeichnet, dass** der Sensor (12) ein akustischer Sensor ist, dessen Empfindlichkeit darauf ausgelegt ist, akustische Durchflussgeräusche aus dem jeweils zugehörigen Verteilschlauch (10) zu erfassen, und die Auswerteelektronik eine Alarmierungsfunktion aufweist, die von der Auswertungssoftware automatisch aktivierbar ist, wenn die von dem akustischen Sensor (12) übertragenen Durchflussgeräusche niedriger sind als der vorgegebene Schwellwert, und die Alarmierungsfunktion der Auswerteelektronik die Ausgabe eines Alarmsignals beinhaltet.

2. Vorrichtung nach Anspruch 1, **dadurch gekennzeichnet, dass** die Auswerteelektronik mit einem Alarmierungsmittel verbunden ist, an das das Alarmsignal übertragbar ist.

3. Vorrichtung nach Anspruch 2, **dadurch gekennzeichnet, dass** von dem Alarmierungsmittel bei einem Alarmsignal anzeigbar ist, von welchem einem Verteilschlauch (10) zugeordneten akustischen Sensor (12) oder von welchem dem akustischen Sensor (12) zugeordneten Verteilschlauch (10) das den Schwellwert unterschreitende Schallsignal übermittelt worden ist.

4. Vorrichtung nach einem der vorhergehenden Ansprüche, **dadurch gekennzeichnet, dass** die in die Auswerteelektronik integrierte Auswertesoftware eine Anpassungsfunktion aufweist, über die der vorgegebene Schwellwert und/oder die Lautstärke der übertragenen Durchflussgeräusche für eine aktuell auszubringende Gülle automatisch anpassbar sind, oder an die Auswerteelektronik eine manuelle Bedienvorrichtung angeschlossen ist, durch deren Betätigung der vorgegebene Schwellwert und/oder die Lautstärke der übertragenen Durchflussgeräusche für eine aktuell auszubringende Gülle manuell anpassbar sind.

5. Vorrichtung nach einem der vorhergehenden Ansprüche, **dadurch gekennzeichnet, dass** der akustische Sensor (12) auf die Außenseite eines zu überwachenden Verteilschlauchs (10) aufgesetzt ist.

6. Vorrichtung nach einem der vorhergehenden Ansprüche, **dadurch gekennzeichnet, dass** der akustische Sensor (12) ein Elektretmikrofon (26) mit einer als Plattenkondensator aufgebauten Schallmembran aufweist, wobei die vom Plattenkondensator unter Schalleinwirkung erzeugten Spannungsschwankungen vom akustischen Sensor (12) als ein elektrisches Spannungssignal als Sensorsignal übertragbar sind.

7. Vorrichtung nach Anspruch 6, **dadurch gekennzeichnet, dass** dem Elektretmikrofon ein Stethoskopkopf (22) mit einer Membran (24) und einem sich zwischen der Innenseite der Membran (24) und dem Elektretmikrofon (26) erstreckenden Schallraum vorgeordnet ist.

8. Vorrichtung nach einem der vorhergehenden Ansprüche, **dadurch gekennzeichnet, dass** jeder akustische Sensor (12) in einer eigenen Akustikbox angeordnet ist oder mehrere oder alle akustischen Sensoren (12) in einer gemeinsamen Akustikbox angeordnet sind, wobei die Akustikbox den oder die darin angeordneten akustischen Sensoren (12) gegen äußeren Schall abschirmen.

9. Vorrichtung nach einem der vorhergehenden Ansprüche, **dadurch gekennzeichnet, dass** an die Auswerteelektronik ein E-/A-Modul angeschlossen ist.

10. Vorrichtung nach einem der vorhergehenden Ansprüche, **dadurch gekennzeichnet, dass** die Vorrichtung eine automatisch, insbesondere von der in die Auswerteelektronik integrierten Auswertesoftware, und/oder manuell auslösbare Spülfunktion aufweist, mit der der als verstopft erkannte Verteilschlauch (10) mit einer Spülvorrichtung durchspülbar ist.

11. Vorrichtung nach einem der vorhergehenden Ansprüche, **dadurch gekennzeichnet, dass** die Auswertungssoftware der Auswerteelektronik eine Vergleichsfunktion aufweist, über die die Sensordaten mehrerer akustischer Sensoren (12) miteinander vergleichbar sind und bei größeren Unterschieden der gemessenen Lautstärke und/oder Frequenzen unterschiedlicher akustischer Sensoren (12) über die Alarmierungsfunktion ein Warnsignal ausgebbar ist.

12. Vorrichtung nach einem der vorhergehenden Ansprüche, **dadurch gekennzeichnet, dass** die Auswertungssoftware der Auswerteelektronik mit einer Verteilerpumpe verbunden ist, über diese Verbindung ein Wert über die aktuell eingestellte Förderleistung übermittelbar ist, und dieser Wert von der Auswertungssoftware berücksichtigbar ist, um die von den akustischen Sensoren (12) übermittelten Sensordaten auszuwerten.

13. Vorrichtung nach einem der vorhergehenden Ansprüche, **dadurch gekennzeichnet, dass** die Auswertungssoftware der Auswerteelektronik einen Speicher aufweist, in dem die von den akustischen Sensoren (12) übermittelten Sensordaten über ein Zeitintervall abspeicherbar sind, insbesondere für jeden akustischen Sensor (12) individuell, und die Auswertungssoftware eine Vergleichsfunktion aufweist, über die die Sensordaten über das Zeitintervall miteinander vergleichbar sind, um aus dem Vergleich eine Prognose über eine drohende Verstopfung zu erstellen, und von der Auswertungssoftware bei der Erkennung einer drohenden Verstopfung über die Alarmierungsfunktion ein Warnsignal ausgebbar ist.

14. Verfahren zur Ausbringung von Gülle mit einem Gülletank und an den Gülletank angeschlossenen mehreren Verteilschläuchen (10), mit einer sensorgestützten Verstopfungsüberwachung, wobei von jedem der an den zu überwachenden Verteilschläuchen (10) angebrachten Sensoren (12) aufgenommene Fließsignale als Sensordaten an eine Auswerteelektronik übermittelt und von der Auswertungselektronik mit einem Schwellwert verglichen werden, **dadurch gekennzeichnet, dass** die Sensoren (12) akustische Sensoren sind, die als Fließsignale Schallsignale verarbeiten, und bei einer Unterschreitung des Schwellwerts durch die vom akustischen Sensor (12) an die Auswerteelektronik übermittelten Sensordaten von der Auswerteelektronik ein Alarmsignal ausgelöst wird, und das Verfahren Gebrauch macht von den gegenständlichen Merkmalen von einem oder mehreren der Ansprüche 1 bis 13.

## Claims

1. Device for spreading liquid manure, comprising a liquid manure tank (4) and a plurality of distributing hoses (10) attached to the liquid manure tank (4), a sensor (12) being attached to each of the distributing hoses (10) to be monitored, the sensor (12) being connected to an electronic evaluation system via a connection line, it being possible to transmit the flow signals detected by the sensor (12) to the electronic evaluation system via the connection line, and the electronic evaluation system comprising evaluation software by means of which the transmitted flow signals can be compared with a predetermined threshold value, **characterised in that** the sensor (12) is an acoustic sensor, the sensitivity of which is designed to detect acoustic flow sounds from the associated distributing hose (10) in each case, and the electronic evaluation system comprises an alerting function that can be automatically activated by the evaluation software if the flow sounds transmitted from the acoustic sensor (12) are lower than the predetermined threshold value, and the alerting function of the electronic evaluation system includes outputting an alert signal.

2. Device according to claim 1, **characterised in that** the electronic evaluation system is connected to an alerting means to which the alert signal can be transmitted.

3. Device according to claim 2, **characterised in that** if there is an alert signal, the alerting means can indicate which acoustic sensor (12) associated with a distributing hose (10) or which distributing hose (10) associated with the acoustic sensor (12) has transmitted the sound signal that falls below the threshold value.

4. Device according to any of the preceding claims, **characterised in that** the evaluation software integrated in the electronic evaluation system comprises an adjusting function, by means of which the predetermined threshold value and/or the volume of the transmitted flow sounds can be automatically adjusted for liquid manure to be currently spread, or a manual operating device is connected to the electronic evaluation system, as a result of the actuation of which manual operating device the predetermined threshold value and/or the volume of the transmitted flow sounds can be adjusted for a liquid manure to be currently spread.

5. Device according to any of the preceding claims, **characterised in that** the acoustic sensor (12) is placed on the outside of a distributing hose (10) that is to be monitored.

6. Device according to any of the preceding claims, **characterised in that** the acoustic sensor (12) comprises an electret microphone (26) having a sound diaphragm that is formed as a plate capacitor, it being possible for the voltage fluctuations that are generated by the plate capacitor when exposed to sound to be transmitted, as an electrical voltage signal in the form of a sensor signal, by the acoustic sensor (12).

7. Device according to claim 6, **characterised in that** a stethoscope head (22), having a diaphragm (24) and a sound chamber extending between the inner face of the diaphragm (24) and the electret microphone (26), is arranged upstream of the electret microphone.

8. Device according to any of the preceding claims, **characterised in that** each acoustic sensor (12) is arranged in a separate acoustic box, or a plurality of or all acoustic sensors (12) are arranged in a common acoustic box, the acoustic box shielding the sensor or sensors (12) arranged therein from external sound.

9. Device according to any of the preceding claims, **characterised in that** an E-module /A-module is connected to the electronic evaluation system.

10. Device according to any of the preceding claims, **characterised in that** the device comprises evaluation software that is automatic, in particular integrated in the electronic evaluation system, and/or a rinsing function that can be triggered manually, by means of which function the distributing hose (10) that is detected as being clogged can be rinsed through using a rinsing device.

11. Device according to any of the preceding claims, **characterised in that** the evaluation software of the electronic evaluation system comprises a comparison function by means of which the sensor data of a plurality of acoustic sensors (12) can be compared with one another and a warning signal can be emitted by means of the alerting function if there are significant differences in the measured volumes and/or frequencies of different acoustic sensors (12).

12. Device according to any of the preceding claims, **characterised in that** the evaluation software of the electronic evaluation system is connected to a distributing pump, by means of which connection a value relating to the currently set pump capacity can be transmitted, and said value can be taken into consideration by the evaluation software in order to evaluate the sensor data transmitted from the acoustic sensors (12).

13. Device according to any of the preceding claims, **characterised in that** the evaluation software of the electronic evaluation system comprises a memory in which the sensor data transmitted from the acoustic sensors (12) can be stored over a time interval, in particular individually for each acoustic sensor (12), and the evaluation software comprises a comparison function by means of which the sensor data can be compared with one another over the time interval, in order to produce from the comparison a prediction with regard to imminent clogging, and a warning signal can be emitted by the evaluation software by means of the alerting function if imminent clogging is detected.

14. Method for spreading liquid manure by means of a liquid manure tank and a plurality of distributing hoses (10) connected to the liquid manure tank, comprising monitoring, in a sensor-supported manner, whether the hoses are clogged, flow signals received by each of the sensors (12) that are attached to the distributing hoses (10) to be monitored being transmitted as sensor data to an electronic evaluation system and being compared with a threshold value by the electronic evaluation system, **characterised in that** the sensors (12) are acoustic sensors that process sound signals as flow signals, and, if the threshold value is not reached by the sensor data that is transmitted from the acoustic sensor (12) to the electronic evaluation system, an alert signal is triggered by the electronic evaluation system, and the method makes use of the device features from one or more of claims 1 to 13.

## Revendications

1. Dispositif d'épandage de lisier, comprenant un réservoir à lisier (4) et plusieurs tuyaux de distribution (10) reliés au réservoir à lisier (4), un capteur (12) étant monté sur chacun des tuyaux de distribution (10) à surveiller, le capteur (12) étant relié à une électronique d'évaluation par le biais d'une ligne de connexion, les signaux de débit détectés par le capteur (12) étant transmis à l'électronique d'évaluation par le biais de la ligne de connexion, et l'électronique d'évaluation comportant un logiciel d'évaluation permettant de comparer les signaux de débit transmis à une valeur de seuil prescrite, **caractérisé en ce que** le capteur (12) est un capteur acoustique dont la sensibilité est conçue pour détecter des bruits de débit acoustiques provenant du tuyau de distribution associé (10) et **en ce que** l'électronique d'évaluation comporte une fonction d'alarme qui peut être activée automatiquement par le logiciel d'évaluation lorsque les bruits de débit transmis par le capteur acoustique (12) sont inférieurs à la valeur de seuil prescrite, et la fonction d'alarme de l'électronique d'évaluation comporte la sortie d'un signal d'alarme.

2. Dispositif selon la revendication 1, **caractérisé en ce que** l'électronique d'évaluation est relié à un moyen d'alarme auquel le signal d'alarme peut être transmis.

3. Dispositif selon la revendication 2, **caractérisé en ce que**, en présence d'un signal d'alarme, les moyens d'alarme permettent d'indiquer quel capteur acoustique (12) associé à un tuyau de distribution (10) ou quel tuyau de distribution (10) associé à un capteur acoustique (12) a transmis le signal sonique passant au-dessous de la valeur de seuil.

4. Dispositif selon l'une des revendications précédentes, **caractérisé en ce que** le logiciel d'évaluation intégré dans l'électronique d'évaluation comporte une fonction d'ajustement permettant d'ajuster automatiquement la valeur de seuil prescrite et/ou le volume du bruit de débit transmis pour un lisier en cours d'épandage, ou l'électronique d'évaluation est relié à un dispositif de commande manuel dont l'opération permet d'ajuster manuellement la valeur de seuil prédéterminée et/ou le volume de bruit de débit transmis pour un lisier en cours d'épandage.

5. Dispositif selon l'une des revendications précédentes, **caractérisé en ce que** le capteur acoustique (12) est placé du côté extérieur d'un tuyau de distribution à surveiller (10).

6. Dispositif selon l'une des revendications précédentes, **caractérisé en ce que** le capteur acoustique (12) comporte un microphone à électret (26) pourvu d'une membrane sonique élaboré comme un condensateur à plaques, les fluctuations de tension générées par le condensateur à plaques sous l'influence du son pouvant être transmises par le capteur acoustique (12) sous la forme d'un signal de tension électrique comme signal de capteur.

7. Dispositif selon la revendication 6, **caractérisé en ce qu'**une tête de stéthoscope (22), pourvue d'une membrane (24) et d'un espace sonore s'étendant entre l'intérieur de la membrane (24) et le microphone à électret (26), est disposée en amont du microphone à électret.

8. Dispositif selon l'une des revendications précédentes, **caractérisé en ce que** chaque capteur acoustique (12) est disposé dans un boîtier acoustique propre ou plusieurs capteurs acoustiques (12), ou tous les capteurs acoustiques (12), sont disposés dans un boîtier acoustique commun, le boîtier acoustique protégeant le ou les capteurs acoustiques (12), placés à l'intérieur, contre les bruits extérieurs.

9. Dispositif selon l'une des revendications précédentes, **caractérisé en ce qu'**un module d'entrée/sortie est relié à l'électronique d'évaluation.

10. Dispositif selon l'une des revendications précédentes, **caractérisé en ce que** le dispositif comporte une fonction de rinçage qui peut être déclenchée manuellement et/ou automatiquement, notamment par le logiciel d'évaluation intégré dans l'électronique d'évaluation et qui permet de rincer le tuyau de distribution (10), détecté comme bouché, avec un dispositif de rinçage.

11. Dispositif selon l'une des revendications précédentes, **caractérisé en ce que** le logiciel d'évaluation de l'électronique d'évaluation comporte une fonction de comparaison qui permet de compare les données de capteur d'une pluralité de capteurs acoustiques (12) entre eux et qui permet de délivrer un signal d'alarme, par le biais de la fonction d'alarme, en cas de différences relativement importantes entre différents capteurs acoustiques (12) en termes de volume mesuré et/ou de fréquences.

12. Dispositif selon l'une des revendications précédentes, **caractérisé en ce que** le logiciel d'évaluation de l'électronique d'évaluation est relié à une pompe de distribution, **en ce qu'**une valeur relative à la capacité de transport actuellement réglée peut être transmise par cette liaison et **en ce que** cette valeur peut être prise en compte par le logiciel d'évaluation pour évaluer les données de capteur transmises par les capteurs acoustiques (12).

13. Dispositif selon l'une des revendications précédentes, **caractérisé en ce que** le logiciel d'évaluation de l'électronique d'évaluation comporte une mémoire dans laquelle les données de capteur, transmises par les capteurs acoustiques (12), peuvent être mémorisées dans un intervalle de temps, en particulier individuellement pour chaque capteur acoustique (12), **en ce que** le logiciel d'évaluation comporte une fonction de comparaison qui permet de comparer les données de capteur entre elles dans l'intervalle de temps pour pronostiquer, à partir de la comparaison, une obstruction imminente et **en ce qu'**un signal d'avertissement peut être délivré par le logiciel d'évaluation, par le biais de la fonction d'alarme, en cas de détection d'une obstruction imminente.

14. Procédé d'épandage de lisier au moyen d'un réservoir à lisier et de plusieurs tuyaux de distribution (10) reliés au réservoir à lisier, d'un dispositif de surveillance d'obstruction, des signaux de débit reçus par chacun des capteurs (12) montés sur les tuyaux de distribution à surveiller (10) étant transmis comme données de capteur à une électronique d'évaluation et comparés à une valeur de seuil par l'électronique d'évaluation,
**caractérisé en ce que** les capteurs (12) sont des capteurs acoustiques qui traite des signaux sonores comme signaux de débit, **en ce qu'**un signal d'alarme est déclenché par l'électronique d'évaluation lorsque les données de capteur transmis à l'électronique d'évaluation passent au-dessous de la valeur de seuil, et **en ce que** le procédé utilise les caractéristiques de dispositif d'une ou de plusieurs des revendications 1 à 13.
